Europäisches Patentamt

European Patent Office

Office européen des brevets

(19)

(11) Veröffentlichungsnummer: **0 344 463 B1**

(12)   # EUROPÄISCHE PATENTSCHRIFT

(45) Veröffentlichungstag der Patentschrift:
**18.09.91 Patentblatt 91/38**

(51) Int. Cl.$^5$: **F02K 9/52**

(21) Anmeldenummer: **89107601.0**

(22) Anmeldetag: **27.04.89**

(54) **Einspritzelement in Koaxialbauweise für Raketenbrennkammern.**

(30) Priorität: **01.06.88 DE 3818623**

(43) Veröffentlichungstag der Anmeldung:
**06.12.89 Patentblatt 89/49**

(45) Bekanntmachung des Hinweises auf die
Patenterteilung:
**18.09.91 Patentblatt 91/38**

(84) Benannte Vertragsstaaten:
**FR GB IT SE**

(56) Entgegenhaltungen:
**DE-A- 3 328 973**
**DE-A- 3 424 225**
**FR-A- 2 570 129**
**US-A- 3 270 499**
**US-A- 3 468 487**
**US-A- 3 662 960**
**US-A- 3 740 946**

(73) Patentinhaber: **Messerschmitt-Bölkow-Blohm
Gesellschaft mit beschränkter Haftung
Robert-Koch-Strasse
W-8012 Ottobrunn (DE)**

(72) Erfinder: **Schmidt, Günther, Dr.
Platanenstrasse 152
W-8021 Taufkirchen (DE)**
Erfinder: **Langel, Günter
Niobestrasse 28
W-8000 München 82 (DE)**
Erfinder: **Dederra, Helmut
Bürgermeister-Wild-Strasse 33c
W-8012 Ottobrunn (DE)**

## Beschreibung

Die Erfindung betrifft ein Einspritzelement in Koaxialbauweise für Raketenbrennkammern mit einem Brennkammerdruck von 5 bis 25 bar und für Betrieb mit zwei hypergol reagierenden Treibstoffen, gemäß dem Oberbegriff des Patentanspruches 1.

Aus der US-PS 2874539 ist die Anwendung des Prinzipes der koaxialen Einspritzung zweier flüssiger Treibstoffkomponenten für hypergole und nicht-hypergole Treibstoffe bekannt. Die einfache, mehr schematische Darstellung ist jedoch nicht geeignet, dem Fachmann konkrete Hinweise für die konstruktive Ausbildung des Einspritzkopfes bzw. der Einspritzelemente zu geben. Speziell hypergole Treibstoffe müssen vor Eintritt in die vorgesehene Reaktionszone absolut voneinander getrennt werden, um ungewollte Reaktionen mit ggf. katastrophalen Folgen zu vermeiden. Auch solche Sicherheitsaspekte sind bei der Ausführung nach der genannten US-PS nicht berücksichtigt.

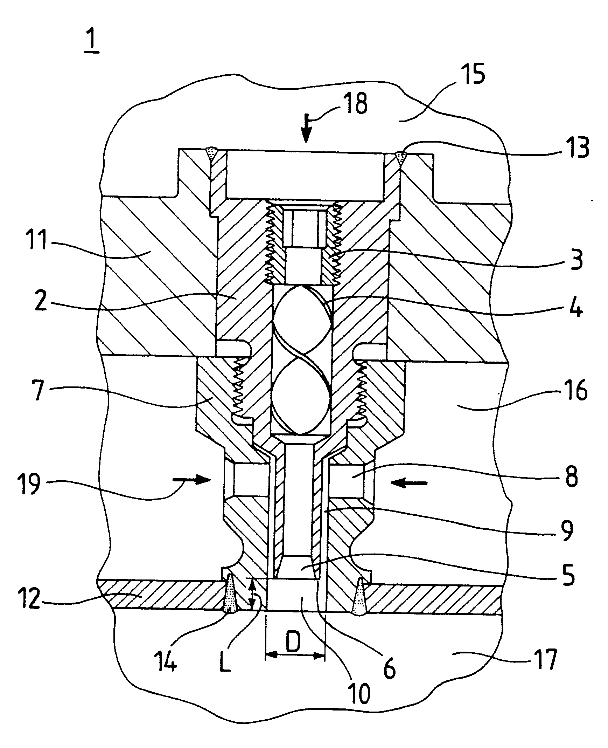

In der DE-PS 3424225 sind Einspritzelemente für nicht-hypergole Treibstoffe (z.B. $H_2/O_2$, $CH_4/O_2$) gezeigt, welche sich insbesondere in der Ausführung nach Fig. 1 und 2 sehr gut bewährt haben. Gemäß dem Koaxialprinzip besteht jedes Einspritzelement aus einem Zentralkörper für den Oxidator und einer zu diesem konzentrischen, zweiteiligen, verschraubten Hülse für den Brennstoff, welche axial über den Austritt des Zentralkörpers vorsteht. Der Austritt des Zentralkörpers ist konisch erweitert, besitzt eine scharfe Mündungskante und Drallflächen im Konusbereich. Die Hülse besitzt radiale Eintrittsbohrungen und einen im wesentlichen zylindrischen, zentralen Kanal, welcher den Austritt des Zentralkörpers kreisringförmig umgibt. Die bekannten Vorteile dieser Koaxialanordnung sind :

a) Eine "lokale" Verbrennung im Bereich jedes Einspritzelementes, d.h. minimale Wechselwirkungen zwischen benachbarten Elementen. Dadurch wird eine stabile Verbrennung und eine einfache Schubregelung erreicht.

b) Eine geringe Wärmebelastung der Einspritzkopf-Frontplatte, somit eine lange Standzeit.

c) Ein niedriger Einspritz-Druckabfall, dadurch ein geringer Tank- bzw. Förderdruck.

Beim nicht-hypergolen Betrieb laufen Gemischbildung und Verbrennung im wesentlichen nacheinander ab. Das Mischen des in der Regel gasförmigen Brennstoffes mit dem flüssigen Oxidator wird durch eine wesentlich größere Einströmgeschwindigkeit des Brennstoffes (Geschwindigkeitsverhältnis z.B. 15 : 1) begünstigt.

Bei hypergolen Treibstoffen, welche bei der Einspritzung beide flüssig sind und bei Kontakt spontan miteinander reagieren, sind entsprechend andere Verhältnisse gegeben. So ist ein inniger Kontakt der beiden Komponenten wichtiger als ein Durchmischen. Große Geschwindigkeitsunterschiede sind dabei nicht sinnvoll.

Die genannten Unterschiede sowie Sicherheitsaspekte haben die praktische Nutzung des Koaxialprinzipes für hypergole Treibstoffe bislang verhindert.

Die Aufgabe der Erfindung besteht somit darin, die Koaxialeinspritzung unter Beibehaltung ihrer Vorteile an die Anforderungen hypergoler Reaktion anzupassen.

Diese Aufgabe wird durch die im Anspruch 1 gekennzeichneten Maß- und Geschwindigkeitsverhältnisse bzw. Geschwindigkeitsgrenzwerte gelöst.

Die angegebenen Werte sind das Ergebnis umfangreicher Versuche und machen die erfolgreiche Anwendung des Koaxialprinzipes für hypergole Treibstoffkomponenten erst möglich. Voraussetzung ist ein Brennkammerdruck von ca. 5 bis 25 bar, bevorzugte Brennstoffe sind Hydrazin ($N_2H_4$) und dessen Derivate (z.B. Monomethyl-Hydrazin "MMH" und unsymmetrisches Dimethylhydrazin), bevorzugte Oxidatoren sind Stickstofftetroxid ($N_2O_4$), "MON" (Mixed Oxygen Nitride, $N_2O_4+NO_4$) oder Salpetersäure ($HNO_3$). Geringfügige Abweichungen von den angegebenen Werten im Zehntelbereich (Geschwindigkeitsgrenzwerte) bzw. im Hundertstelbereich (Verhältnisangaben) werden noch als im Rahmen der Erfindung liegend betrachtet.

Der Unteranspruch 2 beinhaltet eine bevorzugte Ausgestaltung des Einspritzelementes nach Anspruch 1. Die Verwendung von Drosselbohrungen im Zentralkörper und in der Hülse erlaubt eine präzise Vorgabe der Durchflußmengen und verhindert — infolge der hohen Strömungsgeschwindigkeit im Drosselquerschnitt — ein Vordringen der Brennzone in die Treibstoffkammern.

Die Erfindung wird nachfolgend anhand des in der Zeichnung dargestellten Ausführungsbeispieles noch näher erläutert.

Die Figur zeigt in vereinfachter Darstellung einen Teillängsschnitt durch einen Einspritzkopf im Bereich eines Einspritzelementes.

Das Einspritzelement 1 ist Bestandteil des Einspritzkopfes eines Raketentriebwerkes, wobei im Einspritzkopf eines großen Haupttriebwerkes einige hundert solcher Einspritzelemente 1 angeordnet sein können. Jedes Einspritzelement 1 besteht aus zwei Hauptteilen, nämlich dem Zentralkörper 2 und der Hülse 7.

Der Zentralkörper 2 enthält den Oxidator-Strömungskanal, welcher seinerseits mehrere Abschnitte mit unterschiedlichen Funktionen umfaßt. Der in der Oxidatorkammer 15 unter Druck anstehende Oxidator tritt zunächst in die Drossel 3 ein, welche zur Einstellung der gewünschten Durchflußmenge dient und aufgrund der in ihrem engsten Querschnitt herrschenden, hohen Geschwindigkeit ein Zurückschlagen der Verbrennung in die Oxidatorkammer 15 verhindert. Die Drossel 3 ist in den Zentralkörper 2 eingeschraubt und somit auswechselbar. Mittels des anschließenden Drallkörpers 4 wird der axialen Strömungsbewegung des flüssigen Oxidators eine Drehbewegung überlagert, welche die Flüssigkeitsteilchen durch Fliehkraft an der Kanalwand hält. Nach Durchströmen des folgenden, verengten Kanalabschnittes gelangt der Oxidator in den Austritt 5. Aufgrund des immer noch vorhandenen Dralles folgt der flüssige Oxidator der sich konisch erweiternden Wandkontur des Austrittes 5 und erhält dabei zusätzlich eine radiale Bewegungskomponente. Die zugeschärfte Mündungskante 6 des Austrittes 5 definiert den Eintritt des Vorreaktionsraumes 10, in welchem Oxidator und Brennstoff aufeinandertreffen.

Die der Regelung und Führung des Brennstoffstromes dienende Hülse 7 umgibt den in die Brennstoffkammer 16 ragenden Teil des Zentralkörpers 2 konzentrisch und ist mit diesem verschraubt. Der in der Brennstoffkammer 16 unter Druck anstehende, ebenfalls flüssige Brennstoff tritt über die radialen Drosselbohrungen 8 in den zentralen Kanal 9 ein. Die kreiszylindrische Innenwand des Kanales 9 in der Hülse 7 bildet mit der kreiszylindrischen Außenkontur des Zentralkörpers 2 in diesem Bereich einen Ringspalt, durch welchen der Brennstoff in den Vorreaktionsraum 10 strömt.

Hypergole Treibstoffe müssen aus Sicherheitsgründen vor Erreichen der vorgegebenen Reaktionszone hermetisch voneinander getrennt werden. Aus diesem Grund ist der Zentralkörper 2 mit der den Oxidator und den Brennstoff trennenden Grundplatte 11 durch die Schweißnaht 14 flüssigkeits- und gasdicht verbunden. Auch die Hülse 7 ist mit der brennkammerseitigen Frontplatte 12 durch die Schweißnaht 13 flüssigkeits- und gasdicht verbunden. Statt Schweißverbindungen kommen an einer oder beiden dieser kritischen Stellen auch Lötverbindungen in Betracht.

Der über die Mündungskante 6 des Austrittes 5 axial zur Brennkammer 17 hin vorstehende Teil des Kanales 9 bildet den Vorreaktionsraum 10 mit der Länge L und dem Durchmesser D. Die Mündungskante 6 des Austrittes 5 ist aus dem Grunde scharfkantig, damit der Oxidator unmittelbar am Eintritt des Vorreaktionsraumes 10 bereits mit dem Brennstoff in Berührung kommt und mit diesem reagiert. Je früher und intensiver die Vorreaktion der Treibstoffe einsetzt, desto kürzer ist der erforderliche Weg bis zur vollständigen Verbrennung, d.h. desto kürzer kann die Brennkammer 17 sein. Dabei ist jedoch zu beachten, daß der den Vorreaktionsraum 10 umschließende Teil der Hülse 7 thermisch und mechanisch nicht überlastet wird. In Versuchen hat sich ein Längen-/Durchmesserverhältnis L/D von 0,4 bis 0,8 als günstig erwiesen. Die Treibstoffe strömen mit einer Geschwindigkeit von mindestens 5 $^m$/s und höchstens 12 $^m$/s in die Vorreaktionszone ein, wobei das Geschwindigkeitsverhältnis Brennstoff/Oxidator bei 0,7 bis 1,3 liegt. Wie bereits erwähnt, tritt der Brennstoff als kreisringförmiger Flüssigkeitsstrahl in den Vorreaktionsraum 10 ein, der Oxidator trifft auf die innere Oberfläche des Brennstoffstrahles mit Geschwindigkeitskomponenten in axialer, tangentialer und radialer Richtung.

## Patentansprüche

1. Einspritzelement in Koaxialbauweise für Raketenbrennkammern mit einem Brennkammerdruck von 5 bis 25 bar und für Betrieb mit zwei hypergol reagierenden Treibstoffen, wobei als Oxidator vorzugsweise Stickstofftetroxid oder Salpetersäure, als Brennstoff vorzugsweise Hydrazin und/oder dessen Derivate verwendet werden, mit einem zumindest weitgehend rotationssymmetrischen Zentralkörper für den Oxidator, dessen Strömungskanal einen Drallkörper sowie einen sich konisch erweiternden Austritt mit scharfer Mündungskante aufweist, und mit einer ein- oder mehrteiligen, den Zentralkörper zumindest im Austrittsbereich konzentrisch umgebenden und — unter Bildung eines Vorreaktionsraumes — axial zur Brennkammer hin vorstehenden Hülse für die Zumischung des Brennstoffes, welche seitliche Zuströmöffnungen und einen zentralen, zumindest im Bereich des Vorreaktionsraumes kreiszylindrischen Kanal aufweist, **dadurch gekennzeichnet,** daß das Verhältnis der Länge L zum Durchmesser D des Vorreaktionsraumes (10) 0,4 bis 0,8 beträgt, und daß die Strömungsquerschnitte des Zentralkörpers (2) und der Hülse (7) so bemessen sind, daß beim Eintritt in den Vorreaktionsraum (10) die Geschwindigkeit jeder Treibstoffkomponente minimal 5 $^m$/s und maximal 12 $^m$/s, das Verhältnis der Geschwindigkeit des Brennstoffes zur Geschwindigkeit des Oxidators 0,7 bis 1,3 beträgt.

2. Einspritzelement nach Anspruch 1, **dadurch gekennzeichnet,** daß im Strömungskanal des Zentralkörpers (2) stromaufwärts des Drallkörpers (4) eine vorzugsweise auswechselbare Drossel (3) angeordnet ist, und daß die Zuströmöffnungen der Hülse (7) als Drosselbohrungen (8) ausgeführt sind.

## Claims

1. Injection element in coaxial construction for rocket combustion chambers with a combustion-chamber pressure of 5 to 25 bar and for operation with two hypergolically reacting fuels, whereby the oxidator is preferably nitrogentetroxide and the fuel is preferably hydrazine and/or their derivatives, with an at least substantially axially symmetrical central body for the oxidator, the flow channel of which has a spin body as well as a conically extending outlet with a sharp mouth edge, and with a single or multiple section sleeve which concentrically surrounds the central body at least in the outlet region and protrudes axially relative to the combustion chamber whilst forming a pre-reaction area, for mixing in of fuel, which sleeve has lateral intake apertures and a central channel which is circular-cylindrical at least in the region of the pre-reaction area, **characterised in that** the ratio of length L and diameter D of the pre-reaction area (10) is 0.4 to 0.8, and that the flow cross-sections of the central body (2) and of the sleeve (7) are dimensioned so that the speed of each fuel component on entry into the pre-reaction area (10) is minimum 5'''/s and maximum 12'''/s, and the ratio of fuel speed and oxidator speed is 0.7 to 1.3.

2. Injection element according to claim 1, **characterised in that** a preferably exchangeable throttle (3) is arranged upstream of the spin body (4) in the flow channel of the central body (2), and in that the intake apertures of the sleeve (7) are throttle bores (8).

## Revendications

1. Organe d'injection de type coaxial pour chambre de combustion de fusée dont la pression à l'intérieur de la chambre de combustion est comprise entre 5 et 25 bars et pour le fonctionnement avec deux diergols hypergoliques, de préférence du tétroxyde d'azote et de l'acide nitrique étant utilisés comme comburants, et de préférence de l'Hydrasine et/ou ses dérivés étant utilisés comme carburant, comportant un corps central au moins sensiblement symétrique de rotation pour le comburant, dont le conduit d'écoulement est muni d'un élément de mise en rotation et comporte une sortie s'ouvrant en forme de cône avec un bord d'embouchure vif, ainsi qu'une douille en une ou en plusieurs parties, entourant de manière concentrique le corps central au moins dans la zone de sortie, et dépassant axialement par rapport à celui-ci en direction de la chambre de combustion — en formant une chambre de pré-réaction — pour le mélange du carburant, qui est munie d'ouvertures d'écoulement latérales et d'un conduit central cylindrique circulaire au moins dans la zone de la chambre de pré-réaction, caractérisé en ce que le rapport de la longueur L au diamètre D de la chambre de pré-réaction (10) est compris entre 0,4 et 0,8, et en ce que les sections d'écoulement du corps central (2) et de la douille (7) sont dimensionnées de manière telle qu'à l'entrée dans la chambre de pré-réaction (10) la vitesse de chaque composant du propergol soit de 5 m/s minimum et 12 m/s maximum, et que le rapport de la vitesse du carburant à la vitesse du comburant soit compris entre 0,7 et 1,3.

2. Organe d'injection selon la revendication 1, caractérisé en ce qu'un étrangleur (3), de préférence interchangeable, est monté dans le conduit d'écoulement du corps central (2) en amont de l'élément de mise en rotation (4), et en ce que les orifices d'écoulement de la douille (7) sont réalisés sous forme d'orifices d'étranglements (8).